# EUROPÄISCHE PATENTSCHRIFT

(11) **EP 0 836 760 B1**
(45) Veröffentlichungstag und Bekanntmachung des Hinweises auf die Patenterteilung: **19.12.2001**
(21) Anmeldenummer: 96921882.5
(22) Anmeldetag: 03.07.1996
(51) Int. Cl.: H02K 21/12, H02K 1/27

(54) **MEHRPHASIGE ELEKTRISCHE MASCHINE**
MULTIPHASE ELECTRIC MACHINE
MOTEUR ELECTRIQUE POLYPHASE

(30) Priorität: 05.07.1995 DE 19524542
(43) Veröffentlichungstag der Anmeldung: 22.04.1998
(73) Patentinhaber: HILL, Wolfgang, 76135 Karlsruhe (DE)
(72) Erfinder: HILL, Wolfgang, 76135 Karlsruhe (DE)
(86) Internationale Anmeldenummer: DE9601180
(87) Internationale Veröffentlichungsnummer: WO9702644

(56) Entgegenhaltungen:
- EP-A- 0 334 645
- EP-A- 0 562 610
- US-A- 5 086 245
- PATENT ABSTRACTS OF JAPAN vol. 8, no. 74 (E-236) [1511] , 6.April 1984 & JP,A,58 222766 (TOKYO SHIBAURA DENKI K.K.), 24.Dezember 1983,

## Beschreibung

Die Erfindung betrifft eine mehrphasige elektrische Maschine gemäß dem Oberbegriff des Anspruch 1.

Zur vollständigen Vermeidung der Polfühligkeit wird in mehrphasigen Maschinen entweder die Breite der Pollücke zwischen den Erregerpolen gleich dem der Phasenanzahl entsprechenden Bruchteil einer Polteilung dimensioniert oder die Nuten werden um eine Nutteilung geschrägt. Ersteres vermindert die Luftspaltausnutzung und führt für eine vorgegebene mittlere Luftspaltflußdichte zu erhöhten Materialkosten. Letzteres vermindert die magnetische Koppelung zwischen Rotor und Stator, weshalb zur Kompensation dieser Leistungsminderung ebenfalls mehr Geld in das Material der Erregerpole gesteckt werden muß.

In der US-A-5 086 245 wird für einen Gleichstrommotor eine Blechnung vorgeschlagen, die das Rastmoment vermindert indem der Blechschnitt in der Luftspaltöberfläche der Zähne jeweils eine Vertiefungen aufweist. Die Anzahl der Nutschlitze wird gegenüber der Anzahl der Zähne verdoppelt. Zusatzlich erfolgt eine Schrägung des Blechpakets, indem aufeinanderliegende Bleche um kleine Winkel (bevorzugt 0,5°) gegeneinander vesetzt sind und so ein größerer Schrägungswinkel 15 - 30° realisiert wird. Die zusätzlichen Vertiefungen in den Polflächen erhöhen den magnetischen Widerstand und reduzieren die Maschinenleistung.

Der Erfindung liegt daher die Aufgabe zugrunde, eine mehrphasige elektrische Maschine derart weiter zu bilden, daß eine günstige magnetische Ausnutzung der eingesetzten aktiven Werkstoffe sowie eine hohe Raumausnutzung bei niedrigen Herstellungskosten erreicht wird.

Diese Aufgabe wird erfindungsgemäß mit den Merkmalen der Ansprüche 1 gelöst. Erfindungsgemäß weist die Pollücke in Bewegungsrichtung mindestsens eine Stufe auf, wobei die Breite der Pollücke in etwa der Größe des Absatzes entspricht. Hierdurch wird die magnetisch nicht genutzte Luftspaltfläche auf der Erregerseite nahezu halbiert, ohne die magnetische Kopplung zu verschlechtern oder die Polfühligkeit zu erhöhen. Vorzugsweise ist die gestufte Pollückenfläche ist zu ihrem Mittelpunkt punktsymmetrisch und weist in ihren beiden Hälften Kanten auf, die in ihrer Richtung mit den Kanten der am Luftspalt gegenüberliegenden Pole übereinstimmen.

Gegenüber einer exakt eine Nutteilung (Vollpolmaschine) oder den der Phasenanzahl entsprechenden Bruchteil einer Polteilung (Einzelpolmaschine) einnehmenden Pollückenfläche, sind in zwei diagonal gegenüberliegenden Quadranten dieser Fläche noch aktive Polflächen vorhanden. Dies führt zu einer Steigerung der magnetisch genutzten Luftspaltoberfläche, ohne daß ein resultierendes Reluktanzmoment entsteht. Durch die Steigerung der Polabdeckung kann die gleiche mittlere Luftspaltflußdichte und damit Leistungsfähigkeit der Maschine mit wesentlich weniger Materialkosten für die Erregung erreicht werden.
- **Beispiel**:: In einer durch Neodymmagnete (B_{R} = 1,2 T) erregten Maschine sollen folgende Vorgaben gelten: Luftspalt = 1 mm ; mittlere Luftspaltflußdichte = 0,7 T.
a) Polabdeckung von 66 %:
   → Flußdichte im Magneten 1,06 T und eine Magnethöhe von ca. 8 mm.
a) Polabdeckung von 80 %:
   → Flußdichte im Magneten 0,875 T und eine Magnethöhe von ca. 3 mm

Es können somit über 60% Magnetkosten eingespart werden.

Dagegen bedeutet eine Stufe in der Pollücke nur einen geringfügig höheren Fertigungs- und Montageaufwand bzw. ist fast kostenneutral, wenn die Magnetpole in Nutrichtung ohnehin aus mehreren Segmenten zusammengesetzt werden. Die Erfindung ermöglicht somit insbesondere bei großen permanenterregten Maschinen eine deutliche Kostenreduzierung.

Die Erfindung wird anhand vorteilhafter Ausführungsformen in den **Zeichnungen** dargestellt.
- Fig. 1: zeigt schematisch die Veränderung der Polflächenüberlappung bei sich bewegenden Erregerpolen in einer dreiphasigen Einzelpolmaschine;
- Fig. 2: zeigt schematisch die Veränderung der Polflächenüberlappung bei sich bewegenden Erregerpolen in einer dreiphasigen Vollpolmaschine.

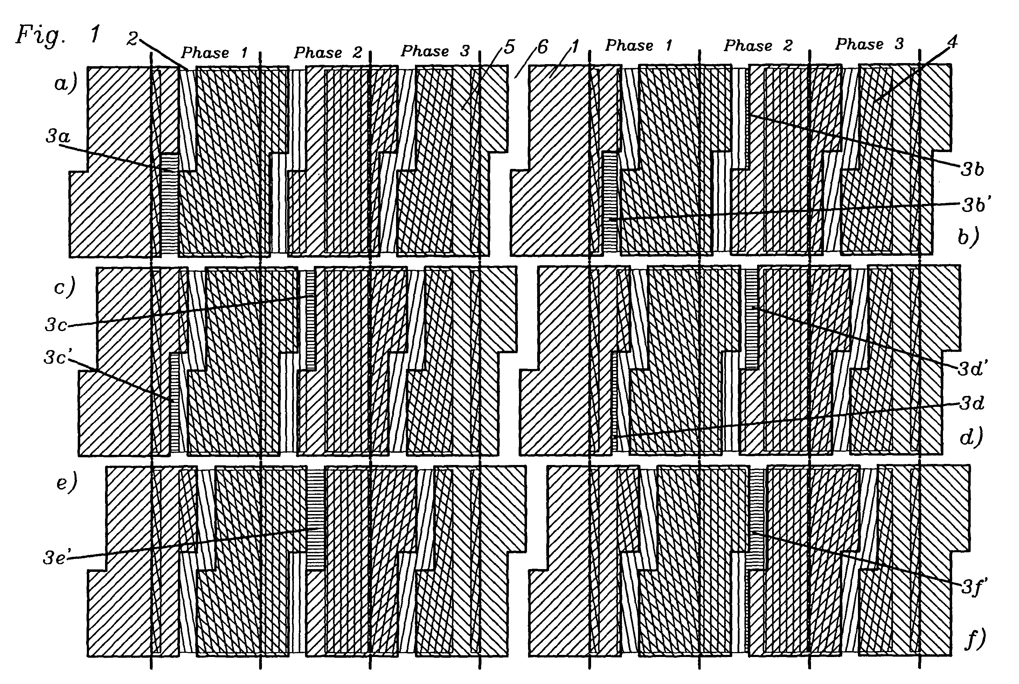

Die ***Figur 1*** werden in einer linearisierten, schematischen Darstellung sechs Stellungen von erfindungsgemäßen Erregerpolflächen **1** gegenüber den Ankerpolen **2** einer dreiphasigen Maschine gezeigt, wobei von jeder Phase nur eine Polteilung unterhalb der symmetrisch angeordneten Erregerpole **1** sichtbar ist. Anhand der sich überlappenden Schraffuren sind der Zeichnung die Überschneidungsbereiche **3, 4** entnehmbar. Hierbei weisen die Erregerpole **1** eine diagonal verlaufende Schraffur und die Zahnflächen **2a-c** der drei Ankerbereiche eine steil nach oben weisende Schraffur auf.

Wesentlich ist der dichter von links nach rechts schraffierte Bereich **3**. Er symbolisiert die Schnittfläche der Anker- **5** und Erregerpollücken **6**. Wenn diese Überdeckung der Pollücken **3** in der Summe aller drei Phasen während der Bewegung des Rotors konstant bleibt, ist auch die Überdeckung der Polflächen **4** konstant und es entsteht keine resultierende Polfühligkeit.

In ***Fig. 1a)*** tritt die für die Polfühligkeit aussagekräftige Pollückenschnittfläche **3a** lediglich in der Phase 1 auf und beträgt dort die Hälfte der Erregerpollücke **6.**

In der ***Fig. 1b)*** haben sich die Erregerpole **1** relativ zu den Ankerpolen **2** etwas nach links bewegt. Die hierbei in Phase 1 abnehmende Pollückenschnittfläche **3b** wird durch die entstehende Pollückenschnittfläche **3b'** ausgeglichen, so daß die Summe der Pollückenschnittflächen über alle drei Phasen konstant bleibt.

In ***Fig. 1c)*** sind die Pollückenschnittflächen **3c** und **3c'** in Phase **1** und **2** gleich groß und entsprechen jeweils gerade einem Viertel der Fläche einer Erregerpollücke **6.**

In ***Fig. 1d)*** wächst die Pollückenschnittfläche **3d'** weiter an, während die Fläche **3d** abnimmt und in ***Fig. 1e)*** tritt die gesamte Pollückenschnittfläche **3e'** lediglich in Phase **2** auf.

In ***Fig. 1f)*** wechselt die Pollückenschnittfläche **3f'** von der oberen Hälfte zur unteren Hälfte einer Erregerpollücke **6,** wobei der Zugewinn in der unteren Hälfte exakt in dem Moment beginnt, wenn in der oberen Hälfte die Verkleinerung anfängt.

Es wird ersichtlich, daß durch die erfindungsgemäße Ausgestaltung der Erregerpollücke **6** die Summe der Schnittflächen in jedem beliebigen Zeitpunkt konstant bleibt.

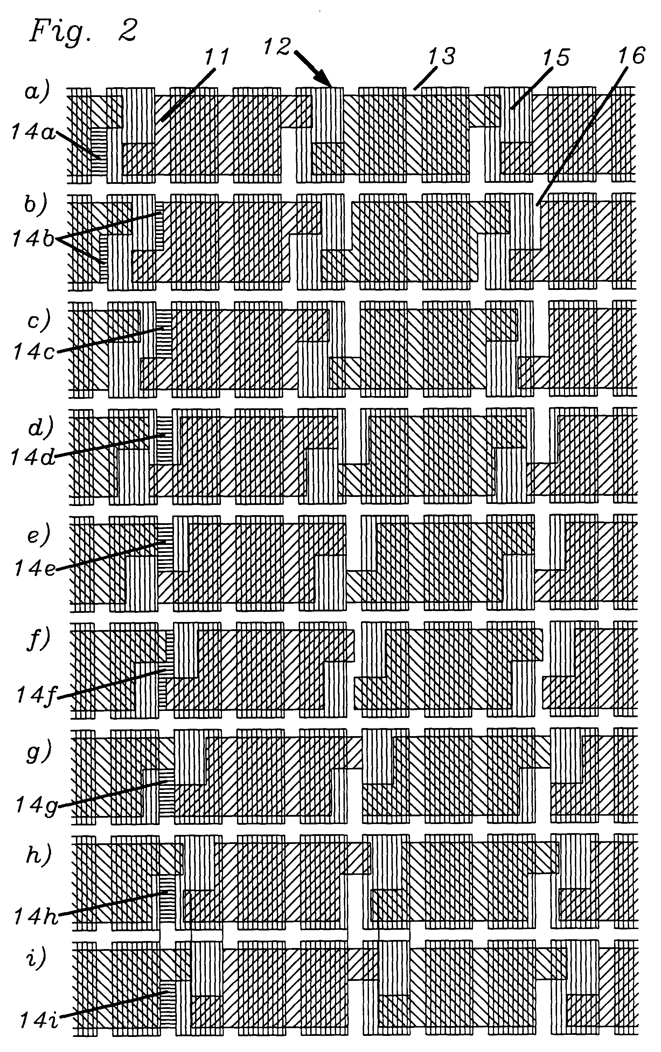

Dieses Prinzip wird auch in ***Figur 2*** angewandt, wobei sich die Erregerpole **11** nun jedoch gegenüber einem symmetrisch aufgebauten Anker **12** mit einer verteilten Wicklung und drei Nuten **13** pro Polteilung bewegen. In den ***Fig 2a*** ***bis*** ***2i)*** bewegen sich die Erregerpole **11** um eine Nutteilung von links nach rechts, wobei die als Indikator dienende Pollückenschnittfläche **14a-i** konstant bleibt. Der Abstand zwischen den Ankerzähnen **15** kann hierbei beliebig gewählt werden, da die Symmetrie alleine durch die Stufe in der Erregerpollücke **16** erzwungen wird.

## Patentansprüche

1. Mehrphasige elektrische Maschine mit Erregerpolen (1, 11) denen ein genuteter weichmagnetischer Körper (2, 12) gegenüberliegt,
**dadurch gekennzeichnet, daß** die Pollücke (6, 16) im Rotor oder Stator mindestens eine Stufung in Bewegungsrichtung aufweist, die in etwa der mittleren Breite der Pollücke (6, 16) in den Endbereichen entspricht.

2. Mehrphasige elektrische Maschine nach Anspruch 1,
**dadurch gekennzeichnet, daß** die Pollücke (6, 16) Kanten aufweist, die in ihrer Richtung mit den Kanten der am Luftspalt gegenüberliegenden Pole (2, 15) übereinstimmt.

3. Mehrphasige elektrische Maschine nach Anspruch 1,
**dadurch gekennzeichnet, daß** die Pollücke (6, 16) in ihrem mittleren Bereich in Bewegungsrichtung eine Breite aufweist, die einer Nutteilung oder dem der Phasenanzahl entsprechenden Bruchteil einer Polteilung entspricht.

4. Mehrphasige elektrische Maschine nach Anspruch 3,
**dadurch gekennzeichnet, daß** die Breite der Pollücke (6, 16) an den sich gegenüberliegenden Enden gegenüber der Breite im Absatzbereich halbiert ist und in etwa der Höhe eines Absatzes entspricht.

5. Mehrphasige elektrische Maschine nach Anspruch 1,
**dadurch gekennzeichnet, daß** die Fläche der Polücke (6, 16) punktsymmetrisch zu ihrem Mittelpunkt ist.

## Claims

1. Multi-phase electric machine comprising exciter poles (1, 11) and a grooved soft magnetic body (2, 12) which is placed opposite to said exciter poles,
wherein said pole gaps (6, 16) in the rotor or the stator possesses at least one step in the direction of movement, said step having a height that corresponds approximately to the average width of said pole gap (6, 16) in the two end regions.

2. Multi-phase electric machine as recited in claim 1,
wherein said poles gap (6, 16) have edges corresponding in their direction to the edges of said poles, which lie on the opposite side of the air gap.

3. Multi-phase electric machine as recited in claim 1,
wherein said pole gap (6, 16) possesses in its their middle region in direction of the movement a width which corresponds to a groove pitch or to a fraction of a pole pitch in accordance with the number of phases.

4. Multi-phase electric machine as recited in claim 3,
wherein the width of the pole gap (6, 16) at the opposite ends is approximately equal to one half the width at said middle region of the pole gap and is approximately equal to said height of the step.

5. Multi-phase electric machine as recited in claim 1,
wherein the area of the pole gap (6, 16) is centrically symmetric to its center point.

## Revendications

1. Machine électrique polyphasée avec des pôles excitateurs (1, 11), en face des pôles se trouvent un corps magnétique doux rainuré (2, 12),
dont il est caractéristique que la lacune du pôle (6, 16) a, dans le rotor ou dans le stator, au moins un gradin dans la direction du mouvement étant environnement identique avec la largeur en moyenne des lacune du pôle (6, 16) dans les extrémités.

2. Machine électrique polyphasée selon la revendication 1,
dont il est caractéristique que la lacune du pôle (6,16) a des bords, qui en ce qui concerne la direction, sont identiques avec les bords des pôles qui se trouvent en face à l'entrefer (2, 15).

3. Machine électrique polyphasée selon la revendication 1,
dont il est caractéristique que la lacune du pôle (6, 16) a, dans sa partie centrale dans la direction du mouvement, une largeur qui est identique avec une division de la rainure ou qui est identique avec la fraction de la division du pôle qui est égale au nombre des phases.

4. Machine électrique polyphasée selon la revendication 3,
dont il est caractéristique que la largeur de la lacune du pôle (6, 16) aux extrémités qui se trouvent en face les uns des autres, a la valeur d'une moitié de la largeur dans la partie du gradin et comme cela, elle a environnement la hauteur d'un gradin.

5. Machine électrique polyphasée selon la revendication 1,
dont il est caractéristique que la surface de la lacune du pôle (6, 16) est centrosymétrique en relation avec son centre.
